# EUROPÄISCHE PATENTSCHRIFT

(11) **EP 3 551 521 B1**
(45) Veröffentlichungstag und Bekanntmachung des Hinweises auf die Patenterteilung: **03.02.2021**
(21) Anmeldenummer: 17823047.0
(22) Anmeldetag: 04.12.2017
(51) Int. Cl.: F16J 15/16, F16C 33/06, F16D 3/40, B62D 1/16, B62D 1/20, F16C 3/035, F16C 29/04, F16C 29/08, F16C 33/78, F16D 3/06

(54) **LENKWELLE FÜR EIN KRAFTFAHRZEUG**
STEERING SHAFT FOR A MOTOR VEHICLE
ARBRE DE DIRECTION DE VÉHICULE À MOTEUR

(30) Priorität: 06.12.2016 DE 102016224271
(43) Veröffentlichungstag der Anmeldung: 16.10.2019
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH)
(74) Vertreter: thyssenkrupp Intellectual Property GmbH
(86) Internationale Anmeldenummer: PCT/EP2017/081323
(87) Internationale Veröffentlichungsnummer: WO 2018/104209

(56) Entgegenhaltungen:
- DE-U1-202009 006 128
- US-A1- 2001 018 369

## Beschreibung

### Stand der Technik

Die Erfindung betrifft eine Lenkwelle für ein Kraftfahrzeug, umfassend eine Hohlwelle und eine Innenwelle, welche koaxial in der Hohlwelle angeordnet, relativ zur Hohlwelle in Richtung der Längsachse der Lenkwelle teleskopierbar und mit der Hohlwelle über mindestens einen Wälzkörper drehmomentschlüssig verbunden ist, wobei der Wälzkörper in einem Wälzkörperkäfig zwischen Innenwelle und Hohlwelle in Richtung der Längsachse abrollbar aufgenommen ist.

Der Einsatz einer in ihrer Achsrichtung teleskopierbaren Lenkwelle in einem Kraftfahrzeug ermöglicht eine Verstellung der Lenksäule zur Einstellung der Lenkradposition in Längsrichtung. Außerdem kann die Lenkwelle im Fall eines Crashs in Richtung ihrer Längsachse in sich zusammengeschoben werden, wodurch wirksam verhindert wird, dass die Lenksäule in das Innere der Fahrgastzelle eindringt und zu Verletzungen der Insassen führt. Dies wird erreicht durch zwei gegeneinander teleskopierbare Wellen, nämlich einer Hohlwelle, die als äußere Welle bzw. Außenwelle durch ein rohrförmigen Hohlprofil gebildet wird, und einer darin in Richtung der Längsachse der Lenkwelle teleskopartig, d.h. koaxial und axial verschieblich gelagerten inneren Welle, an deren bezüglich der Fahrtrichtung hinteren Ende das Lenkrad montiert ist. Durch teleskopierendes Zusammenschieben oder Ausziehen von Innenwelle und Hohlwelle kann die Lenkwelle verkürzt oder verlängert werden.

Zwischen der Hohlwelle und der Innenwelle sind in der gattungsgemäßen Bauweise zumindest ein, in der Regel mehrere Wälzkörper angeordnet. Die Wälzkörper können zwischen der Außenfläche der Innenwelle und der Innenfläche der Hohlwelle in Richtung der Längsachse abrollen, so dass eine leichtgängige wälzkörpergelagerte axiale Verstellbarkeit der Innenwelle relativ zur Hohlwelle realisiert wird. Zur Übertragung des zur Lenkung eingebrachten Drehmoments weisen die Innenwelle auf ihrer Außenseite und die Hohlwelle auf ihrer Innenseite nutförmige, einander radial gegenüberliegende, in Richtung der Längsachse verlaufende Wälzkörperlaufbahnen auf, zwischen denen die Wälzkörper angeordnet sind und als Formschlusselemente dienen, wodurch ein bezüglich einer Drehung um die Längsachse wirksamer Formschluss gebildet wird, der Hohl- und Innenwelle drehmomentschlüssig miteinander verbindet. Gattungsgemäße Lenkwellen werden daher auch als Rollschiebewellen bezeichnet.

Die Wälzkörper sind in einem Wälzkörperkäfig um ihre Abrollachsen frei drehbar aufgenommen, wie beispielsweise in der DE 10 2014 017 555 A1 beschrieben, wodurch sie zwischen den Wellen und insbesondere mit Abstand relativ zueinander in Position gehalten und geführt werden.

Um die auftretende Reibung und damit die Verstellkräfte zu reduzieren, Verschleiß zu verringern und die Lebensdauer zu erhöhen, wird ein Schmiermittel - in der Regel ein Schmierfett - zwischen Hohl- und Innenwelle eingebracht, mit dem die relativ zueinander bewegten Kontaktflächen der Wälzkörper mit den Wälzkörperlaufbahnen und dem Wälzkörperkäfig geschmiert werden. Für einen langfristig störungsfreien Betrieb muss dafür gesorgt werden, dass die Schmierwirkung des Schmierfetts nicht durch von außen eindringende Verunreinigungen beeinträchtigt wird. Außerdem muss verhindert werden, dass das durch die im Betrieb auftretenden Relativbewegungen in Achsrichtung innerhalb der Hohlwelle verteilte Schmierfett nach außen aus der Lenkwelle austritt.

Hierzu ist es aus der genannten DE 10 2014 017 555 A1 bekannt, eine Abdeckkappe auf der Öffnung der Hohlwelle anzubringen, durch welche die Innenwelle abgedichtet nach außen hindurchgeführt ist. Diese Abdeckkappe muss jedoch als separates Bauteil gefertigt und montiert werden, wodurch der Fertigungsaufwand und die Kosten erhöht werden. Außerdem muss eine hinreichend große Menge Schmierfett zwischen Hohlwelle und Innenwelle eingefüllt werden, um unter allen denkbaren Betriebsbedingungen eine sichere Schmierung über den gesamten axialen Verstellbereich der Lenkwelle zu gewährleisten.

Aus der DE 20 2009 006 128 U1, die die Präambel des unabhängigen Anspruchs zeigt, ist ebenfalls eine Lenkwelle der eingangs genannten Art bekannt, bei der die dieselben vorgenannten Probleme auftreten.

Angesichts der vorangehend erläuterten Problematik ist es eine Aufgabe der vorliegenden Erfindung, eine verbesserte Lenkwelle anzugeben, welche eine hohe Betriebssicherheit bei einem geringeren Fertigungsaufwand bietet.

### Darstellung der Erfindung

Zur Lösung der vorgenannten Problematik wird erfindungsgemäß vorgeschlagen, dass der Wälzkörperkäfig zumindest ein Dichtungselement aufweist, welches dichtend gegen die Hohlwelle und/oder die Innenwelle anliegt.

Das erfindungsgemäße Dichtungselement ist dicht an dem Wälzkörperkäfig befestigt und dichtet diesen gegen die Außenwelle oder die Innenwelle, bevorzugt gegen die Innenwelle und die Außenwelle ab. Es wird beim Verstellen der Lenkwelle zusammen mit dem Wälzkörperkäfig und den darin abrollbar gehaltenen Wälzkörpern relativ zur Innen- und Hohlwelle in Achsrichtung bewegt, folglich bildet es eine Gleitdichtung bezüglich einer Linearbewegung in Richtung der Längsachse, die einen Zwischenraum zwischen Wälzkörperkäfig und Hohlwelle und/oder Innenwelle nach außen, zumindest zur Öffnung der Hohlwelle hin, abdichtet, d.h. dass ungewollte Stoffübergänge von einem Raum (beispielsweise dem Schmiermittelcontainer) in einen anderen verhindert oder zumindest begrenzt wird. Durch das Dichtungselement wird somit ein mit dem Wälzkörperkäfig in Achsrichtung relativ zu Innenwelle und Hohlwelle mitbewegter Schmiermittelcontainer realisiert. Dieser Schmiermittelcontainer wird räumlich begrenzt durch das Dichtungselement, den Wälzkörperkäfig sowie durch die jeweiligen Bereiche der Innenseite der Hohlwelle und der Außenfläche der Innenwelle, in dem sich der Wälzkörperkäfig befindet. In dem durch das Dichtungselement abgedichteten Schmiermittelcontainer kann ein Vorrat an Schmiermittel aufgenommen werden, beispielsweise Schmierfett. Das Dichtungselement ist so angeordnet, dass sich das oder die Wälzelemente innerhalb des abgedichteten Bereichs des Schmiermittelcontainers befinden, und entsprechend durch das darin eingeschlossene Schmiermittel benetzt und geschmiert werden.

Der erfindungsgemäß durch das Dichtungselement zwischen dem Wälzkörperkäfig und Innen- und Hohlwelle nach außen abgedichtete Raumbereich, der als Schmiermittelcontainer bezeichnet werden kann, wird durch das Dichtungselement gegen Eindringen von Verunreinigungen von außen geschützt, und der Austritt von Schmiermittel nach außen wird ebenfalls sicher verhindert.

Ein weiterer Vorteil der Erfindung ist, dass der durch das erfindungsgemäße Dichtungselement abgegrenzte Raumbereich des Schmiermittelcontainers kleiner ist als der gesamte Zwischenraum zwischen Innen- und Hohlwelle. Dadurch ist es möglich, mit einem verglichen mit bekannten Rollschiebewellen kleineren Vorrat an Schmiermittel eine verbesserte und unter allen Betriebsbedingungen sichere Schmierung der Wälzkörper zu realisieren. Dadurch wird die Betriebssicherheit erhöht.

Darüber hinaus kann das erfindungsgemäße Dichtungselement zusammen mit dem Wälzkörperkäfig integriert hergestellt und in einem einzigen Arbeitsgang zusammen mit diesem montiert werden. Entsprechend wird der Fertigungs-, Montage- und Kostenaufwand reduziert.

Eine bevorzugte Ausführung der Erfindung sieht vor, dass zumindest ein Dichtungselement um den Wälzkörperkäfig umlaufend ausgebildet ist. Das derartig umlaufende Dichtungselement ist koaxial zur Längsachse angeordnet, d.h. um die Längsachse umlaufend, und liegt bevorzugt dichtend an der Innenseite der Hohlwelle und der Außenseite der Innenwelle an. Dadurch bildet der Wälzkörperkäfig zusammen mit dem Dichtungselement eine Art Kolben mit ringförmigen Querschnitt, der zwischen Innenwelle und Hohlwelle abgedichtet in Achsrichtung linear bewegbar angeordnet ist. Das Schmiermittel wird durch das Dichtungselement im Bereich des Wälzkörperkäfigs gehalten, und ein Austreten des Schmiermittels aus der Hohlwelle wird verhindert.

Das Dichtungselement kann zumindest eine äußere Dichtfläche aufweisen, die auf der Außenseite, d.h. die an dem Wälzlagerkäfig radial außen angeordnet ist und an der Innenseite, d.h. der radial innenliegenden Innenfläche der Hohlwelle abdichtend anliegt und in Achsrichtung entlanggleiten kann, und bevorzugt eine innere Dichtfläche, die auf der Innenseite, d.h. die an dem Wälzlagerkäfig radial nach innen gerichtet angeordnet ist und an der Außenseite, d.h. der radial außen liegenden Außenfläche der Hohlwelle abdichtend anliegt und in Achsrichtung entlanggleiten kann. Dabei ist die Umfangskontur des Dichtelements im Bereich der Dichtflächen jeweils an die Querschnittskonturen von Hohl- und Innenwelle angepasst, insbesondere auch an die nutförmigen Wälzkörperlaufbahnen, so dass Zwischenraum zwischen Wälzkörperkäfig und Innen- und Hohlwelle axial abgedichtet ist.

Es ist vorteilhaft, dass zumindest zwei umlaufende Dichtungselemente mit axialem Abstand zueinander angeordnet sind. Dabei wird zwischen zwei der vorangehend beschriebenen Dichtungselemente, welche den Wälzlagerkäfig bevorzugt gegen die Hohl- und Innenwelle abdichten, in Richtung der Längsachse ein Raumbereich begrenzt, der einen geschlossenen, nach außen abgedichteten Schmiermittelcontainer der oben beschriebenen Art bildet. Dieser Schmiermittelcontainer wird begrenzt durch die Dichtungselemente, die zwischen den Dichtungselementen liegenden axialen Abschnitte der Innen- bzw. Außenflächen von Hohl- bzw. Innenwelle und die Innen- und Außenflächen des Wälzkörperkäfigs. Bei einer Längsbewegung des Wälzkörperkäfigs relativ zu Hohl- und Innenwelle bei Verstellen der Lenksäule wird der Schmiermittelcontainer entsprechend in Achsrichtung mitbewegt, wobei das Schmiermittel zwischen den beiden Dichtungselementen im Bereich des Wälzlagerkäfigs eingeschlossen bleibt.

Bevorzugt sind der oder die Wälzkörper in Richtung der Längsachse zwischen den beiden axial beabstandeten Dichtungselementen angeordnet. Dadurch befinden sich die Wälzkörper innerhalb des Schmiermittelcontainers, so dass sie von dem darin eingeschlossenen Schmiermittel, bevorzugt Schmierfett, umschlossen und geschmiert werden. Durch die erfindungsgemäßen Dichtungselemente wird das Schmiermittel auch bei größeren Bewegungen zuverlässig an dem Wälzkörperkäfig im Bereich der Wälzkörper mitgenommen, und nicht, wie im Stand der Technik über die Länge der Wälzkörperlaufbahnen zwischen Hohl- und Innenwelle verteilt.

Vorzugsweise ist zumindest ein Dichtungselement an einem axialen Endbereich des Wälzkörperkäfigs angeordnet, und besonders bevorzugt sind zwei umlaufende Dichtungselemente an beiden axialen Endbereichen des Wälzkörperkäfigs angeordnet. Der durch diese frontale Anordnung der Dichtungselemente gebildete Schmiermittelcontainer erstreckt sich über die axiale Länge des Wälzkörperkäfigs. Dadurch können sämtliche von dem Wälzkörperkäfig aufgenommenen Wälzkörper mit dem zwischen den Dichtungselementen eingeschlossenen Schmierfett versorgt werden. Der gesamte Wälzkörperkäfig bildet dabei einen gegen Hohl- und Innenwelle abgedichteten Kolben, der einen mit Schmiermittel gefüllten Schmiermittelcontainer zwischen den endseitig angeordneten Dichtungselementen aufweist, in dem die Wälzkörper im Schmiermittel laufen.

Es ist möglich, dass zumindest ein Dichtungselement auf einer Umfangsfläche des Wälzkörperkäfigs umlaufend ausgebildet ist. Dabei weist das Dichtungselement eine Dichtfläche auf, die einen Flächenbereich der Umfangsfläche einschließt. Das Dichtungselement liegt wiederum bevorzugt mit seiner Dichtfläche an der Innenfläche der Hohlwelle und der Außenfläche der Innenwelle an. Dadurch wird von dem Dichtungselement ein geschlossener Raumbereich abgedichtet, der einen sich über einen Teilbereich des Umfangs erstreckenden Schmiermittelcontainer bildet.

Ein auf einer Umfangsfläche des Wälzkörperkäfigs umlaufend ausgebildetes Dichtungselement kann bevorzugt zumindest einen Wälzkörper einschließen, bevorzugt eine Gruppe von Wälzkörpern. Dabei kann durch das Dichtungselement ein die Wälzkörper mit relativ geringem Abstand umgebender Raum abgedichtet werden, mit anderen Worten ein Schmiermittelcontainer mit relativ kleinem Volumen, der im Wesentlichen die Wälzkörper aufnimmt. Eine Gruppe von eingeschlossenen Wälzkörpern kann beispielsweise eine Reihe von mehreren Wälzkörpern umfassen, die in Richtung der Längsachse in einer Wälzkörperlaufbahn aufeinander folgend angeordnet sind.

Das Dichtungselement kann elastisch ausgebildet sein. Es kann beispielsweise eine elastische Dichtlippe aufweisen mit einer Dichtfläche, die als Kontaktfläche in dichtendem Gleitkontakt mit der Hohlwelle bzw. der Innenwelle steht. Durch die elastische Ausbildung des Dichtungselements kann die Dichtfläche federnd gegen die Oberfläche angedrückt werden, dadurch kann eine geringe Gleitreibung bei guter Dichtwirkung realisiert werden, wodurch eine geringe Verstellkraft ermöglicht wird. Die Elastizität kann durch Verwendung eines elastischen Materials erreicht werden, wie beispielsweise Gummi oder ein thermoplastisches Elastomer, oder durch eine Formgebung mit einer schmalen, biegsamen Dichtkante oder stegfömigen Dichtlippe.

Ein Dichtungselement kann separat gefertigt und zur Verfügung gestellt werden, welches anschließend mit dem Wälzkörperkäfig verbunden wird. Beispielsweise kann ein O-Ring aus einem Elastomermaterial in eine an dem Dichtungselement entlang der Dichtfläche verlaufende Dichtungselementaufnahme, beispielsweise eine umlaufende Nut, eingesetzt werden. Dabei kann das Dichtungselement formschlüssig in Position gehalten werden, oder alternativ oder zusätzlich stoffschlüssig fixiert werden, beispielsweise durch Kleben oder Schweißen. Alternativ kann ein Dichtungselement flach-ringförmig ausgebildet sein, mit einer an den Querschnitt zwischen Hohlwelle und Innenwelle angepassten Kontur, so dass es an einer oder beiden axialen Stirnseiten frontal an dem Wälzlagerkäfig angebracht werden kann.

Eine vorteilhafte Ausführung sieht vor, dass das Dichtungselement integral einstückig mit dem Wälzkörperkäfig ausgebildet ist. Dies kann dadurch realisiert werden, dass der Wälzkörperkäfig abschnittsweise einen Dichtungsquerschnitt hat, der im Wesentlichen in Form und Abmessung mit dem freien Querschnitt zwischen Hohlwelle und Innenwelle übereinstimmt. Das dadurch gebildete Dichtungselement liegt mit seiner Umfangskontur mit geringem Spiel abdichtend gegen Hohl- und Innenwelle an. Dabei stellt der Wälzkörperkäfig praktisch einen einstückigen, im Querschnitt ringförmigen Kolben dar, der in Richtung der Längsachse gleitend, abgedichtet koaxial zwischen Innenwelle und Hohlwelle eingesetzt wird. Das Material kann bevorzugt so ausgewählt werden, dass das oder die Dichtungselemente spielarm abdichtend, und dabei leichtgängig gleitend gestaltet werden können.

Eine einstückige Ausbildung kann dadurch realisiert werden, dass der Wälzkörperkäfig als Kunststoff-Spritzgussteil ausgebildet ist. Dabei kann ein thermoplastisches Polymer mit geeigneten Eigenschaften, beispielsweise hinsichtlich Festigkeit und Gleiteigenschaften gewählt werden, welches im Spritzgussverfahren mit einer präzise an den abzudichtenden Querschnitt zwischen Hohl- und Innenwelle angepassten Form gefertigt werden kann. Es ist möglich, den Wälzlagerkäfig aus einem einzigen Polymerwerkstoff zu fertigen. Alternativ ist es möglich, das oder die Dichtungselemente aus einem zweiten Polymer ebenfalls im Spritzgussverfahren einstückig anzuspritzen, im sogenannten Zweifarben-Spritzguss, beispielsweise zur Ausbildung eines elastischen Dichtungselements aus einem weicheren thermoplastischem Elastomer an einem formstabilen Grundkörper des Wälzkörperkäfigs aus einem formstabilen ersten thermoplastischen Polymer.

Ein als Kunststoff-Spritzgussteil gefertigter Wälzkörperkäfig muss jedoch nicht zwingend einstückig mit dem Dichtungselement ausgebildet sein, sondern kann eine oder mehrere Aufnahmen aufweisen, zur nachträglichen Befestigung eines oder mehrerer Dichtungselemente, beispielsweise in Form von O-Ringen.

Bevorzugt ist der zwischen einem Dichtungselement und dem Wälzkörperkäfig und/oder der Innenwelle und/oder der Hohlwelle eingeschlossene Raumbereich zumindest teilweise mit einem Schmiermittel gefüllt ist. Das Schmiermittel kann ein viskoses Schmierfett sein - beispielsweise sogenanntes Wälzlagerfett - oder auch ein Feststoff-Schmiermittel auf Basis von Graphit oder Molybdändisulfid. Erfindungsgemäß ist das Schmiermittel in dem zwischen Dichtungselement, Wälzkörperkäfig und Innen- und Hohlwelle gebildeten Schmiermittelcontainer abgedichtet eingeschlossen.

Bezüglich der Anordnung der Wälzkörper, beispielsweise von Kugeln, kann der Wälzkörperkäfig gestaltet sein, wie dies aus dem Stand der Technik an sich bekannt ist. Dabei ist in der Regel eine Mehrzahl von Wälzkörpern in definierten Positionen mit Abstand zueinander in dem Wälzkörperkäfig frei drehbar aufgenommen. Insbesondere kann zumindest eine Gruppe von Wälzkörpern jeweils mit axialem Abstand benachbart in Richtung der Längsachse eine Wälzkörperreihe in Achsrichtung bilden, die in einer Wälzkörperlaufbahn abrollen können. Die Wälzkörper können einzeln, oder auch in den genannten Wälzkörperreihen mit Winkelabstand in Umfangsrichtung verteilt angeordnet sein, bevorzugt gleichmäßig über den Umfang verteilt. Der Wälzkörperkäfig weist entsprechende Aufnahmen für die Wälzkörper auf, in denen jeweils ein Wälzkörper, beispielsweise eine Kugel, aufgenommen ist. In den Aufnahmen können sich die Wälzkörper frei um ihre Abrollachse drehen, dabei stehen die Wälzkörper nach innen und außen radial aus den Ausnahmen vor, so dass sie ungehindert auf den Wälzlagerlaufbahnen abrollen können. Bei der vorliegenden Erfindung befinden sich die Aufnahmen der Wälzkörper in dem durch das oder die Dichtungselemente abgegrenzten Bereich, innerhalb des dadurch gebildeten Schmiermittelcontainers, so dass die Schmierung durch das darin eingefüllte Schmierfett erfolgt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer Lenkwelle,
- Figur 2: eine Teilansicht einer Lenkwelle gemäß Figur 1 in auseinander gezogenem Zustand,
- Figur 3: einen Längsschnitt entlang der Längsachse durch die Lenkwelle gemäß Figur 1,
- Figur 4: einen Querschnitt B-B durch die Lenkwelle gemäß Figur 3,
- Figur 5: eine perspektivische Ansicht des Wälzlagerkäfigs der Lenkwelle gemäß Figur 1 in einer ersten Ausführungsform,
- Figur 6: eine perspektivische Ansicht einer auseinander gezogenen Lenkwelle wie in Figur 2 mit einem Wälzlagerkäfig in einer zweiten Ausführungsform,
- Figur 7: einen Querschnitt A-A durch die Lenkwelle gemäß Figur 6 in montiertem Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

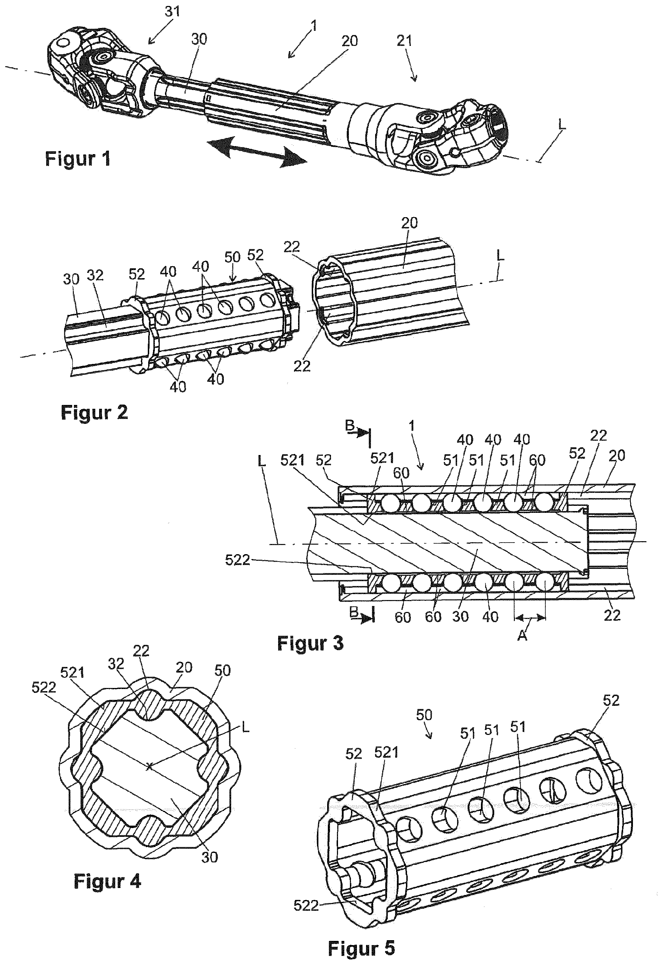

Figur 1 zeigt in perspektivischer Ansicht eine schematisch dargestellte Lenkwelle 1, die eine Hohlwelle 20, auch als äußere Welle oder Außenwelle bezeichnet, und eine Innenwelle 30, auch innere Welle bezeichnet, aufweist, die gegeneinander teleskopierbar sind in Richtung der Längsachse L, d.h. in der mit dem Doppelpfeil angedeuteten Axial- bzw. Längsrichtung.

Die Hohlwelle 20 weist an ihrem freien Ende, welches bezüglich der inneren Welle 30 in Längsrichtung abgewandt ist, eine Gabel 21 auf, welche einen Teil eines Universalgelenks bildet, mit dem die Lenkwelle 1 drehmomentschlüssig mit dem Lenkstrang verbunden ist. Entsprechend weist die Innenwelle 30 an ihrem freien Ende, welches bezüglich der Hohlwelle 20 in Längsrichtung abgewandt ist, eine Gabel 31 auf, welche einen Teil eines weiteren Universalgelenks bildet, mit dem die Lenkwelle 1 momentschlüssig mit dem Lenkstrang verbunden ist. Die Wellen 20 und 30 sind bevorzugt beide als Hohlprofile aus gut kaltumformbarem Stahl gefertigt.

Figur 2 zeigt die Lenkwelle 1 gemäß Figur 1 in einer Explosionsdarstellung, in der die Innenwelle 30 aus der Hohlwelle 20 in Richtung der Längsachse L herausgezogen dargestellt ist.

Zwischen der Hohlwelle 20 und der Innenwelle 30 sind als Kugeln 40 ausgebildete Wälzkörper angeordnet, wie dies in dem Längsschnitt in Figur 3 deutlich erkennbar ist.

Die Hohlwelle 20 weist in ihrer Innenfläche in Längsrichtung durchgehende Nuten 22 auf, und die Innenwelle 30 weist diesen radial gegenüberliegende, korrespondierende Nuten 32 auf, die als Wälzkörperlaufbahnen für die Kugeln 40 dienen, d.h. Kugellaufbahnen bilden. Die Kugeln 40 sind zwischen diesen Nuten 22 derart angeordnet, dass sie in Richtung der Längsachse L darin abrollen können und somit eine lineare Wälzlagerung für eine teleskopierende Relativbewegung von Innenwelle 30 und Hohlwelle 20 bilden. Außerdem fungieren die Kugeln 40 als Formschlusselemente, die bezüglich einer relativen Drehung um die Längsachse L formschlüssig in die Nuten 22 und 32 eingreifen, wodurch sie ein als Lenkmoment in die Innenwelle 30 eingebrachtes Drehmoment auf die Hohlwelle 20 übertragen. In dem gezeigten Beispiel sind jeweils vier Nuten 22 bzw. 32 in Umfangsrichtung verteilt um die Längsachse L angeordnet. Die Innenwelle 30 ist als Vollwelle ausgebildet. Es ist jedoch ebenfalls denkbar und möglich, dass die Innenwelle 30 als Hohlwelle ausgebildet ist.

Die Kugeln 40 sind in einem Wälzlagerkäfig 50 aufgenommen, der als Kugelkäfig ausgebildet ist. Der Wälzlagerkäfig 50 weist für jede der Kugeln 40 eine Wälzkörperaufnahme 51 in Form einer radial durchgehenden Öffnung auf, in der jeweils eine Kugel 40 mit Spiel frei drehbar aufgenommen ist und radial nach innen und außen so weit vorsteht, dass sie in den Nuten 22 und 32 in Längsrichtung ungehindert abrollen kann.

Jeweils eine Mehrzahl von Wälzkörperaufnahmen 51 ist in Längsrichtung jeweils mit Abstand A zueinander angeordnet, so dass die darin aufgenommenen Kugeln 40 jeweils eine axiale Kugelreihe 41 bilden, im dargestellten Beispiel aus jeweils sechs Kugeln 40, die zwischen jeweils paarweise radial gegenüberliegenden Nuten 22 bzw. 32 abrollbar sind. Durch den Wälzkörperkäfig 50 werden die Kugeln 40 der Kugelreihen bei einer telekopierenden Relativbewegung von Innenwelle 30 und Hohlwelle 20 im Abstand A zueinander geführt.

Der Wälzkörperkäfig 50 weist in der Ausführung gemäß Figuren 2, 3, 4 und 5 erfindungsgemäße Dichtungselemente 52 auf, von denen jeweils eines in einem axialen Endbereich des Wälzkörperkäfigs 50 angeordnet ist.

Figur 4 zeigt eine axiale Ansicht von links auf einen Querschnitt B-B durch die Lenkwelle 1 gemäß Figur 3 (wie in Figur 3 mit dem Pfeil angedeutet). Daraus ist erkennbar, dass das Dichtungselement 52 den radialen, im Wesentlichen ringförmigen Querschnitt des Zwischenraums zwischen Innenwelle 30 und Hohlwelle 20 dicht ausfüllt. Dabei liegt das Dichtungselement 52 an seinem Außenumfang, der bezüglich der Längsachse L eine außen umlaufende Dichtfläche 521 bildet, von innen dichtend an der Innenfläche der Hohlwelle 20 an. An seinem Innenumfang weist das Dichtungselement 52 eine innen umlaufende Dichtfläche 522 auf, mit der es dichtend an der Außenfläche der Innenwelle 30 anliegt. Wie aus Figur 4 deutlich erkennbar ist, folgen die Dichtflächen 521 und 522 den Querschnittskonturen von Innenwelle 30 und der als Außenwelle ausgebildeten Hohlwelle 20 einschließlich der Nuten 32 und 22, so dass die Innenwelle 30 gegen die Hohlwelle 20 abgedichtet ist. Mit anderen Worten bewirkt das Dichtungselement 52, dass der Wälzlagerkäfig 50 als eine Art ringförmiger Kolben zwischen Hohlwelle 20 und Innenwelle 30 abgedichtet in Längsrichtung geführt ist. Dabei ist das Dichtungselement 52 so bemessen, dass das umlaufende Spiel ein leichtgängiges Gleiten des Wälzkörperkäfigs 50 in Richtung der Längsachse L zulässt, aber einen Eintritt von Verunreinigungen zwischen Innenwelle 30 und Hohlwelle 20, und auch einen Austritt von Schmiermittel aus dem Zwischenraum zwischen Innenwelle 30 und Hohlwelle 20 weitestgehend verhindert.

Aus Figur 3 geht hervor, dass jeweils ein Dichtungselement 52 in einem axialen Endbereich des Wälzkörperkäfigs 50 angeordnet ist. Durch die vorangehend beschriebene Abdichtung wird durch die beiden Dichtungselemente 52 über die Länge des Wälzkörperkäfigs 50 zwischen Innenwelle 30 und Hohlwelle 20 ein abgedichteter Raumbereich 60 axial begrenzt. Dieser Raumbereich 60 ist folglich eingeschlossen durch die beiden Dichtungselemente 52, die sich über die Länge des Wälzlagerkäfigs 50 erstreckenden Abschnitte von Hohlwelle 20 und Innenwelle 30, sowie die zwischen den Dichtungselementen 52 liegenden Flächenbereiche des Wälzlagerkäfigs 50.

In den Raumbereich 60 wird Schmiermittel eingebracht, nämlich Schmierfett, so dass der Raumbereich 60 als Schmiermittelcontainer dient. Dadurch sind die ebenfalls in dem Raumbereich 60 befindlichen Kugeln 40 von Schmierfett umschlossen, so dass ihre Abrollbewegung bei einer teleskopierenden Relativbewegung von Hohlwelle 20 und Innenwelle 30 in den Nuten 22 und 32 sowie auch in den Wälzkörperaufnahmen 51 geschmiert ist.

Das Schmiermittel ist durch die erfindungsgemäßen Dichtungselemente 52 in dem Raumbereich 60 abgedichtet eingeschlossen, der in Richtung der Längsachse L mit dem Wälzkörperkäfig 50 mitbewegt wird. Dadurch ist gewährleistet, dass im Bereich der Kugeln 40 langfristig auch nach einer Vielzahl von Längsverstellungen der Lenkwelle 1 ausreichend Schmierfett für eine ausreichende Schmierung vorhanden ist. Dabei wird das Schmiermittel nicht wie im Stand der Technik unregelmäßig über die gesamte Länge des Verstellbereichs verteilt, so dass eine kleinere Menge von Schmierfett ausreicht. Durch die Dichtungselemente 52 wird der unerwünschte Austritt von Schmiermittel aus der Hohlwelle 20 weitgehend verhindert, ebenso wie der Eintritt von Verunreingungen in den Raumbereich 60, der die Schmierwirkung beeinträchtigen könnte.

Der Wälzkörperkäfig 50, wie es in Figur 5 einzeln freigestellt gezeigt ist, kann einschließlich der erfindungsgemäßen Dichtungselemente 52 als einstückiges integrales Bauteil hergestellt werden, bevorzugt als Kunststoff-Spritzgussteil. Dabei kann der Wälzkörperkäfig 50 aus einem einzigen thermoplastischen Kunststoffmaterial gefertigt sein, beispielsweise aus Polyoxymethylen (POM), Polypropylen (PP) oder dergleichen, oder der Körper des Wälzkörperkäfigs 50, in dem die Wälzkörperaufnahmen 51 ausgebildet sind, wird aus einem ersten thermoplastischem Polymer gespritzt, welches eine hohe mechanische Festigkeit hat, und die Dichtungselemente 52 werden aus einem gummiartigen, elastischen thermoplastischem Elastomer ebenfalls im Spritzgussverfahren an den Körper des Wälzkörperkäfigs 50 angespritzt. Durch das Elastomer können beispielsweise Dichtlippen angeformt werden, die entlang der Dichtflächen 521 und 522 umlaufen. Derartige Dichtlippen sind elastisch verformbar und liegen federnd an der Hohlwelle 20 und der Innenwelle 30 an, wodurch eine besonders gute Abdichtung erreicht wird, und gleichzeitig eine leichtgängige Verschiebbarkeit des Wälzkörperkäfigs 50 gewährleistet bleibt.

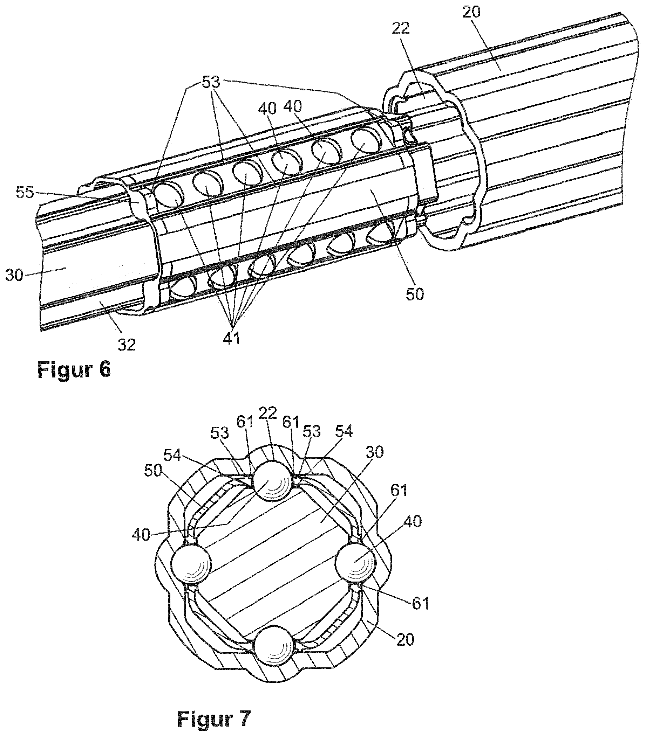

Eine zweite Ausführungsform der Erfindung ist in Figuren 6 und 7 dargestellt. Darin ist ein Dichtungselement als außen an dem Wälzlagerkäfig 50 angeordnete, stegförmige äußere Dichtlippe 53 ausgebildet. Ein weiteres Dichtungselement ist als innen an dem Wälzlagerkäfig 50 angeordnete, stegförmige innere Dichtlippe 54 ausgebildet. Die Dichtlippen 53 und 54 umschließen jeweils einen Flächenbereich der Umfangsfläche, in dem sich eine Kugelreihe 41 befindet, welche aus einer Mehrzahl von in Längsrichtung angeordneten Kugeln 40 gebildet wird, im gezeigten Beispiel aus sechs Kugeln 40.

In Längsrichtung verlaufen die Dichtlippen 53 und 54 jeweils beiderseits einer Kugelreihe 41 entlang, in Umfangsrichtung quer dazu über den Umfang von Formstücken 55. Die Formstücke 55 sind ähnlich geformt wie das Dichtungselement 52 der ersten Ausführungsform gemäß Figur 4 im Bereich der Nuten 22 und 32, und füllen den Nutquerschnitt aus. Dadurch liegen die Dichtlippen 53 bzw. 54 an den Formstücken 55 abdichtend gegen die Nuten 22 bzw. 32 an.

Die äußere Dichtlippe 53 dichtet den eingeschlossenen Bereich, in dem sich die Kugeln 40 der Kugelreihe 41 befinden, gegen die Hohlwelle 20 ab. Die innere Dichtlippe 54 dichtet den eingeschlossenen Bereich, in dem sich die Kugeln 40 der Kugelreihe 41 befinden, gegen die Innenwelle 30 ab. Entsprechend wird durch die erfindungsgemäßen Dichtungselemente in Form der Dichtlippen 53 und 54 und die Oberflächenbereiche von Hohlwelle 20 und Innenwelle 30, die von jeweils einer Dichtlippe 53 oder 54 umschlossen werden, jeweils ein Raumbereich 61 eingeschlossen, in dem sich eine oder mehrere Kugeln 40 einer Kugelreihe 41 befinden. Entsprechend sind in dem gezeigten Beispiel mit vier in Umfangsrichtung angeordneten Kugelreihen 41 vier derartige Raumbereiche 61 ausgebildet. Die Raumbereiche 61 werde, wie oben für den Raumbereich 60 beschrieben, mit Schmiermittel, beispielweise Schmierfett befüllt. Dadurch bildet jeder der Raumbereiche 61 einen Schmiermittelcontainer für jeweils eine der Kugelreihen 41.

Wie oben für den Raumbereich 60 beschrieben werden die Kugeln 40 in den Raumbereichen 61 mit Schmierfett versorgt. Durch die Dichtlippen 53 und 54 ist ebenfalls sichergestellt, dass keine Verunreinigungen zu den Kugeln 40 gelangen, und auch kein Schmiermittel nach außen austritt.

Die Dichtlippen 53 und 54 können jeweils eine Kugelreihe 41 dichtend umschließen, oder auch Gruppen von Kugeln 40 innerhalb einer Kugelreihe 41, oder auch einzelne Kugeln 40. In jedem Fall wird durch erfindungsgemäße Dichtungslippen 53 und 54 ein oder mehrere abgedichtete Raumbereiche 61 geschaffen, die mit dem Wälzkörperkäfig 50 mitbewegt werden und in denen die Kugeln 40 aufgenommen sind.

Die Dichtlippen 53 und 54 können einstückig mit dem Wälzlagerkäfig 50 ausgebildet sein, und bevorzugt im Kunststoff-Spritzguss gefertigt werden. Dabei ist es möglich, dass der Wälzlagerkäfig 50 einschließlich der Dichtlippen 53 und 54 aus einem thermoplastischen Polymer gespritzt wird. Eine vorteilhafte Möglichkeit ist weiterhin, dass der der Körper des Wälzlagerkäfigs 50, in dem die Kugeln 40 aufgenommen sind, aus einem mechanisch belastbaren Polymer gespritzt wird, und die Dichtlippen 53 und 54 aus einem gummiartig elastischen Elastomer einstückig an den Körper angespritzt werden.

Alternativ ist es denkbar und möglich, dass die Dichtlippen 53 und 54, oder Dichtungselemente 52 ganz oder teilweise separat gefertigt und zur nachträglichen Montage an dem Wälzlagerkäfig 50 bereitgestellt werden. Beispielsweise können Dichtlippen 53 und 54 durch O-Ringe aus Elastomerwerkstoff gebildet werden, die an dem Wälzkörperkäfig 50 befestigt werden, beispielsweise durch Einsetzen in umlaufende nutförmige Vertiefungen. Derartige O-Ringe können auch an Dichtelementen 52 eingesetzt werden, zur umlaufenden Abdichtung gegen die Hohlwelle 20 und die Innenwelle 30.

### Bezugszeichenliste

- 1: Lenkwelle
- 20: Hohlwelle
- 21: Gabel
- 22: Nut
- 30: Innenwelle
- 31: Gabel
- 32: Nut
- 40: Kugel
- 41: Kugelreihe
- 50: Wälzkörperkäfig
- 51: Wälzkörperaufnahme
- 52: Dichtungselement
- 521,522: Dichtfläche
- 53,54: Dichtlippen
- 55: Formstück
- 60,61: Raumbereich
- L: Längsachse
- A: Abstand

## Patentansprüche

1. Lenkwelle (1) für ein Kraftfahrzeug, umfassend eine Hohlwelle (20) und eine Innenwelle (30), welche koaxial in der Hohlwelle (20) angeordnet, relativ zur Hohlwelle (20) in Richtung der Längsachse der Lenkwelle (10) teleskopierbar und mit der Hohlwelle (20) über mindestens einen Wälzkörper (40) drehmomentschlüssig verbunden ist, wobei der Wälzkörper (40) in einem Wälzkörperkäfig (50) zwischen Innenwelle (30) und Hohlwelle (20) in Richtung der Längsachse (L) abrollbar aufgenommen ist,
**dadurch gekennzeichnet,**
**dass** der Wälzkörperkäfig (50) zumindest ein Dichtungselement (52, 53, 54) aufweist, welches dichtend gegen die Hohlwelle (20) und/oder die Innenwelle (30) anliegt.

2. Lenkwelle nach Anspruch 1, **dadurch gekennzeichnet, dass** zumindest ein Dichtungselement (52) um den Wälzkörperkäfig (50) umlaufend ausgebildet ist.

3. Lenkwelle nach Anspruch 1 oder 2, **dadurch gekennzeichnet, dass** zumindest zwei Dichtungselemente (52) mit axialem Abstand (A) zueinander angeordnet sind.

4. Lenkwelle nach einem der vorangehenden Ansprüche, **dadurch gekennzeichnet, dass** zumindest ein Dichtungselement (52, 53, 54) auf einer Umfangsfläche des Wälzkörperkäfigs (50) umlaufend ausgebildet ist.

5. Lenkwelle nach Anspruch 4, **dadurch gekennzeichnet, dass** ein Dichtungselement (52, 53, 54) zumindest einen Wälzkörper (40) oder eine Gruppe von Wälzkörpern (40) umschließt.

6. Lenkwelle nach einem der vorangehenden Ansprüche, **dadurch gekennzeichnet, dass** das Dichtungselement (52, 53, 54) elastisch ausgebildet ist.

7. Lenkwelle nach einem der vorangehenden Ansprüche, **dadurch gekennzeichnet, dass** zumindest ein Dichtungselement (52, 53, 54) fest mit dem Wälzkörperkäfig (50) verbunden ist.

8. Lenkwelle nach einem der vorangehenden Ansprüche, **dadurch gekennzeichnet, dass** das Dichtungselement (52, 53, 54) integral einstückig mit dem Wälzkörperkäfig (50) ausgebildet ist.

9. Lenkwelle nach einem der vorangehenden Ansprüche, **dadurch gekennzeichnet, dass** der Wälzkörperkäfig (52, 53, 54) als Kunststoff-Spritzgussteil ausgebildet ist.

10. Lenkwelle nach einem der vorangehenden Ansprüche, **dadurch gekennzeichnet, dass** ein zwischen einem Dichtungselement (52, 53, 54) und dem Wälzkörperkäfig (50) und/oder der Innenwelle (30) und/oder der Hohlwelle (40) eingeschlossener Raumbereich (60, 61) zumindest teilweise mit einem Schmiermittel gefüllt ist.

## Claims

1. A steering shaft (1) for a motor vehicle, comprising a hollow shaft (20) and an inner shaft (30) which is arranged coaxially in the hollow shaft (20), can be telescoped relative to the hollow shaft (20) in the direction of the longitudinal axis of the steering shaft (10), and is connected in a torque-transmitting manner to the hollow shaft (20) via at least one rolling body (40), the rolling body (40) being received in a rolling body cage (50) such that it can roll in the direction of the longitudinal axis (L) between the inner shaft (30) and the hollow shaft (20),
**characterized**
**in that** the rolling body cage (50) has at least one seal element (52, 53, 54) which bears sealingly against the hollow shaft (20) and/or the inner shaft (30).

2. The steering shaft as claimed in claim 1, **characterized in that** at least one seal element (52) is configured so as to run around the rolling body cage (50).

3. The steering shaft as claimed in claim 1 or 2, **characterized in that** at least two seal elements (52) are arranged at an axial spacing (A) from one another.

4. The steering shaft as claimed in one of the preceding claims, **characterized in that** at least one seal element (52, 53, 54) is configured so as to run around on a circumferential face of the rolling body cage (50).

5. The steering shaft as claimed in claim 4, **characterized in that** a seal element (52, 53, 54) encloses at least one rolling body (40) or a group of rolling bodies (40).

6. The steering shaft as claimed in one of the preceding claims, **characterized in that** the seal element (52, 53, 54) is of elastic configuration.

7. The steering shaft as claimed in one of the preceding claims, **characterized in that** at least one seal element (52, 53, 54) is connected fixedly to the rolling body cage (50).

8. The steering shaft as claimed in one of the preceding claims, **characterized in that** the seal element (52, 53, 54) is configured integrally in one piece with the rolling body cage (50).

9. The steering shaft as claimed in one of the preceding claims, **characterized in that** the rolling body cage (52, 53, 54) is configured as a plastic injection molded part.

10. The steering shaft as claimed in one of the preceding claims, **characterized in that** a spatial region (60, 61) which is enclosed between a seal element (52, 53, 54) and the rolling body cage (50) and/or the inner shaft (30) and/or the hollow shaft (40) is filled at least partially with a lubricant.

## Revendications

1. Arbre de direction (1) pour un véhicule automobile, comprenant un arbre creux (20) et un arbre intérieur (30) qui est disposé coaxialement dans l'arbre creux (20), qui peut être télescopé par rapport à l'arbre creux (20) dans la direction de l'axe longitudinal de l'arbre de direction (10) et qui est connecté par une liaison de transmission de couple à l'arbre creux (20) par le biais d'au moins un corps de roulement (40), le corps de roulement (40) étant reçu de manière à pouvoir rouler dans une cage de corps de roulement (50) entre l'arbre intérieur (30) et l'arbre creux (20) dans la direction de l'axe longitudinal (L),
**caractérisé en ce que**
la cage de corps de roulement (50) présente au moins un élément d'étanchéité (52, 53, 54) qui s'applique hermétiquement contre l'arbre creux (20) et/ou l'arbre intérieur (30).

2. Arbre de direction selon la revendication 1, **caractérisé en ce qu'**au moins un élément d'étanchéité (52) est réalisé de manière à s'étendre autour de la cage de corps de roulement (50).

3. Arbre de direction selon la revendication 1 ou 2, **caractérisé en ce qu'**au moins deux éléments d'étanchéité (52) sont disposés à une distance axiale (A) l'un de l'autre.

4. Arbre de direction selon l'une quelconque des revendications précédentes, **caractérisé en ce qu'**au moins un élément d'étanchéité (52, 53, 54) est réalisé de manière à s'étendre sur la périphérie sur une surface périphérique de la cage de corps de roulement (50) .

5. Arbre de direction selon la revendication 4, **caractérisé en ce qu'**un élément d'étanchéité (52, 53, 54) entoure au moins un corps de roulement (40) ou un groupe de corps de roulement (40).

6. Arbre de direction selon l'une quelconque des revendications précédentes, **caractérisé en ce que** l'élément d'étanchéité (52, 53, 54) est réalisé sous forme élastique.

7. Arbre de direction selon l'une quelconque des revendications précédentes, **caractérisé en ce qu'**au moins un élément d'étanchéité (52, 53, 54) est connecté fixement à la cage de corps de roulement (50).

8. Arbre de direction selon l'une quelconque des revendications précédentes, **caractérisé en ce que** l'élément d'étanchéité (52, 53, 54) est réalisé intégralement d'une seule pièce avec la cage de corps de roulement (50).

9. Arbre de direction selon l'une quelconque des revendications précédentes, **caractérisé en ce que** la cage de corps de roulement (52, 53, 54) est réalisée sous forme de pièce moulée par injection de plastique.

10. Arbre de direction selon l'une quelconque des revendications précédentes, **caractérisé en ce qu'**une région de l'espace (60, 61) comprise entre un élément d'étanchéité (52, 53, 54) et la cage de corps de roulement (50) et/ou l'arbre intérieur (30) et/ou l'arbre creux (40) est au moins en partie remplie avec un lubrifiant.
